# EUROPEAN PATENT SPECIFICATION

(11) **EP 1 464 745 B1**
(45) Date of publication and mention of the grant of the patent: **03.12.2008**
(21) Application number: 04001715.4
(22) Date of filing: 27.01.2004
(51) Int. Cl.: D03D 51/00, D03D 49/04

(54) **Weft bar preventing apparatus**
Vorrichtung zum Vermeiden von Schussbanden
Dispositif pour supprimer des barrures en trame

(30) Priority: 31.03.2003 JP 2003094116
(43) Date of publication of application: 06.10.2004
(73) Proprietor: TSUDAKOMA KOGYO KABUSHIKI KAISHA, Kanazawa-shi Ishikawa-ken (JP)
(72) Inventor: Myogi, Keiichi, Ishikawa-gun Ishikawa-ken (JP)
(74) Representative: von Samson-Himmelstjerna, Friedrich

(56) References cited:
- EP-A- 0 456 274
- EP-A- 0 507 739
- US-A- 4 564 050
- US-A- 4 619 294

## Description

### BACKGROUND OF THE INVENTION

### Field of the Invention

The present invention relates to an apparatus for preventing weft bars which makes a loom perform preparatory motion to starting for prevent of weft bars prior to starting to weave.

### Description of Related Art

In a loom, since weft bars are generated in a woven cloth due to elongation of the warp during a stoppage of the loom, treatment to dissolve a cause of the stoppage, etc., the loom is made to perform a motion to prevent the generation of such weft bars.

One of techniques for preventing weft bars in a loom is disclosed in Patent Document 1, wherein tension of the warp is detected before starting operating a loom, a warp beam is rotated or reversed independently on the basis of the detection result, and the loom is started to operate in a state that the warp tension is coincident with a preliminarily set target tension.

### [Patent Document 1]

Japanese Patent Appln. Public Disclosure No. 59-157355

According to the above-mentioned prior art, however, since the warp tension during a regular operation time is frequently changed depending on whether the loom is working well or not, adjustment for preventing a weft bar (re-adjustment of the warp tension at a start preparation time) should be changed in accordance with the warp tension during the regular operation time, and an operator may inadvertently forget to do such a changing work. As a result, over a long period before he notices such a mistake, a weft bar is generated every time the loom stops, which degrades the quality of a cloth.

### SUMMARY OF THE INVENTION

An object of the present invention is to prevent generation of weft bars due to failure in resetting (i.e. setting once more) a target tension of the warp at the start preparation time in a loom in which a target tension different from one during the regular operation is set in correspondence to the time for start preparation, and by inputting a signal for start preparation, the warp tension is set at a corresponding target tension, and thereafter, an operation of the loom is started.

The weft bar preventing apparatus according to the present invention comprises: a target tension processor capable of determining a target tension of the warp at the start preparation time at a value different from a target tension of the warp at the time of the regular operation; and a drive circuit for driving a warp beam so as to make the warp tension the target tension corresponding to the time for preparing for starting to be outputted from the target tension processor by start preparation signal inputted prior to starting operation of a loom. Information for determining the target tension at the start preparation time by the target tension at the regular operation time is preliminarily set in the target tension processor, which determines the target tension at the start preparation time, based on the target tension at the time of the regular operation and the information.

When setting (changing) the target tension at the time of regular operation, the target tension at the start preparation time is automatically determined on the basis of the set target tension. Consequently, in comparison with the conventional art, resetting of the value of the target tension at the start preparation time which was performed every time the target tension at the time of regular operation was changed is no longer necessary, saving the labor and surely preventing generation of weft bars due to failure in setting the target tension at the start preparation time.

It may be constituted such that the above-mentioned information includes a function which makes the target tension of the warp as a parameter, and that the target tension processor carries out an operation using the function to determine the target tension at the start preparation time.

It may be constituted such that the information further includes a correction factor, that the function includes a mathematical expression to multiply the target tension of the warp at the time of regular operation by the correction factor, and that the target tension processor determines the target tension at the start preparation time by multiplying the target tension at the time of regular operation by the correction factor.

It may be constituted such that the information further includes a correction value, that the function includes a mathematical expression, and that the target tension processor determines the target tension of the warp at the start preparation time by adding the target tension during the regular operation to the correction value.

It may be constituted such that the information includes a data group including the target tension at the time of the start preparation determined for every target tension at the time of regular operation, the data group being stored so as to be selected by using the target tension of the warp at the time of regular operation, and that the target tension processor determines the target tension at the start preparation time by selecting data corresponding to the value of the target tension at the time of regular operation from the data group.

It is possible to constitute such that at least a part of the information is set at every rotation angle of the main shaft of the loom, that a rotation angle signal of the main shaft representing the rotation angle of the main shaft is inputted in the target tension processor, and that, when a start preparation signal is inputted, the target tension processor determines, using the information, the target tension at the time of regular operation and a main shaft rotation angle signal detected during stoppage of the loom, a corresponding target tension at the start preparation time. In this case, the information to be set at every rotation angle includes the correction factor, correction amount or the data group.

The target tension processor may have a processing portion which determines a target tension at the start preparation time on the basis of the target tension during the regular operation and the information and outputs the determined target tension to the drive circuit at the start preparation time.

### BRIEF DESCRIPTION OF THE DRAWINGS

Fig. 1 is a schematic drawing of a loom provided with the weft bar preventing apparatus according to the present invention.
Fig. 2 is a block diagram of a let-off control unit constituting a part of the weft bar preventing apparatus shown in Fig. 1.
Fig. 3 is a view showing an embodiment of a target tension operation part in the let-off control unit shown in Fig. 2.
Fig. 4 is a view showing an embodiment of a correction factor and a correction value in the target tension operation part shown in Fig. 3.
Fig. 5 is a view showing another embodiment of the target tension operation part in the let-off control unit shown in Fig. 2.

### Description of the Preferred Embodiments

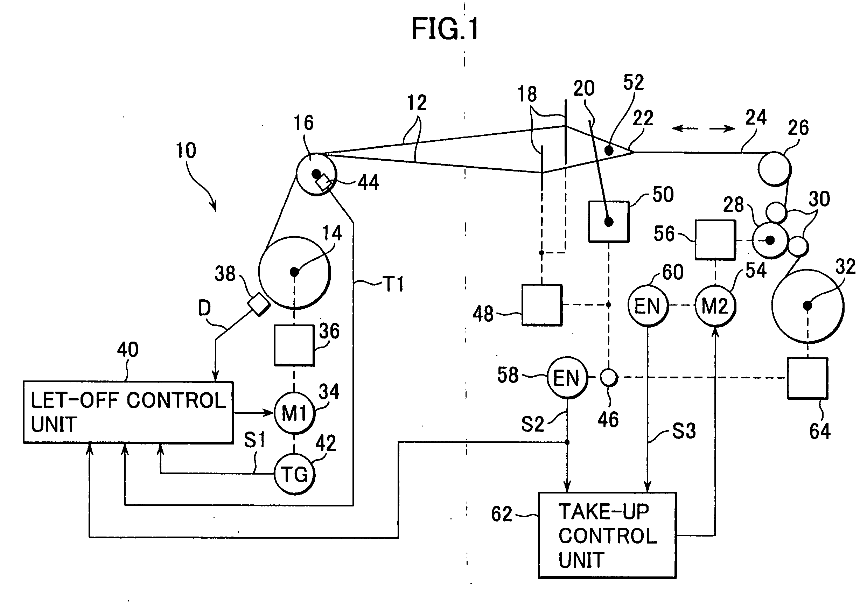

Referring to Fig. 1, in the loom 10, the warp 12 extends from a warp beam (let-off beam) 14 around which the warp 12 is wound to a cloth fell 22 via a back roller 16, a plurality of heald frames 18 and a reed 20. A woven cloth 24 extends from the cloth fell 22 through a guide roller 26 to a surface roll 28 and let off by the surface roll 28 and a pair of press rolls 30 to a cloth roll beam 32 to be taken up on the cloth roll beam 32.

The warp beam 14, is rotated through a gear-like let-off mechanism 36, and lets off a plurality of warps 12 in a sheet form by a let-off motor 34. The quantity of the warps 12 wound around the warp beam 14 gradually decreases, following the let-off (feeding) of the warps 12 from the warp beam 14.

Consequently, the beam diameter of the warp beam 14 is detected by a beam diameter sensor (beam feeler) 38, and a detected beam diameter signal D is supplied to a let-off control unit 40 which controls the let-off motor 34. The rotation speed of the output shaft of the let-off motor 34 is detected by a tachogenerator 42 and a detected rotation speed signal S1 is supplied to the let-off control unit 40.

The warp tension (actual value) acting on the warp 12 is detected by a warp tension sensor 44 for detecting a load acting on the back roller 16, and the detected warp tension T1 is supplied to the let-off control unit 40.

Each heald frame 18 is reciprocated up and down by a motion converting mechanism 48 which receives the rotational motion of a main shaft 46 to be rotated by a main shaft motor (not shown) to form the warp shed 12 upward and downward.

The reed 20, swung by a motion converting mechanism 50, beats the weft 52 inserted into the shed of the warps 12 against the cloth fell 22.

The surface roll 28, is rotated by a take-up mechanism 56 which receives the rotation of a take-up motor 54, and lets off the cloth 24 to the cloth roll beam 32 in cooperation with the pair of press rolls 30. For this reason, the surface roll 28 acts as a take-up roll.

The rotation angles of the main shaft 46 and the take-up motor 54 are respectively detected by encoders 58 and 60. A detected main shaft rotation angle signal S2 and a take-up motor rotation angle signal S3 are supplied to a take-up control unit 62 which controls the take-up motor 54. Also, the main shaft rotation angle signal S2 may also be supplied to the let-off control unit 40.

The cloth roll beam 32 is supported through a slide bearing (not shown) and, is rotated by a take-up torque adjusting mechanism 64 which receives the rotation of the main shaft 46 so that a circumferential speed of the cloth 24 wound around the cloth roll beam 32 may become a little faster than the let-off speed of the cloth 24, and rotated so that the take-up tension of the cloth 24 may be maintained constant.

At the start preparation time of the loom 10, the let-off control unit 40 normally rotates or reverses the let-off motor 34 so as to set the tension of the warp 12 at the target tension at the start preparation time. A take-up control unit 62 may be constituted to normally rotate or reverse the take-up motor 54 for adjusting the position of the cloth fell 22 in the moving direction of the warp 12 at the start preparation time.

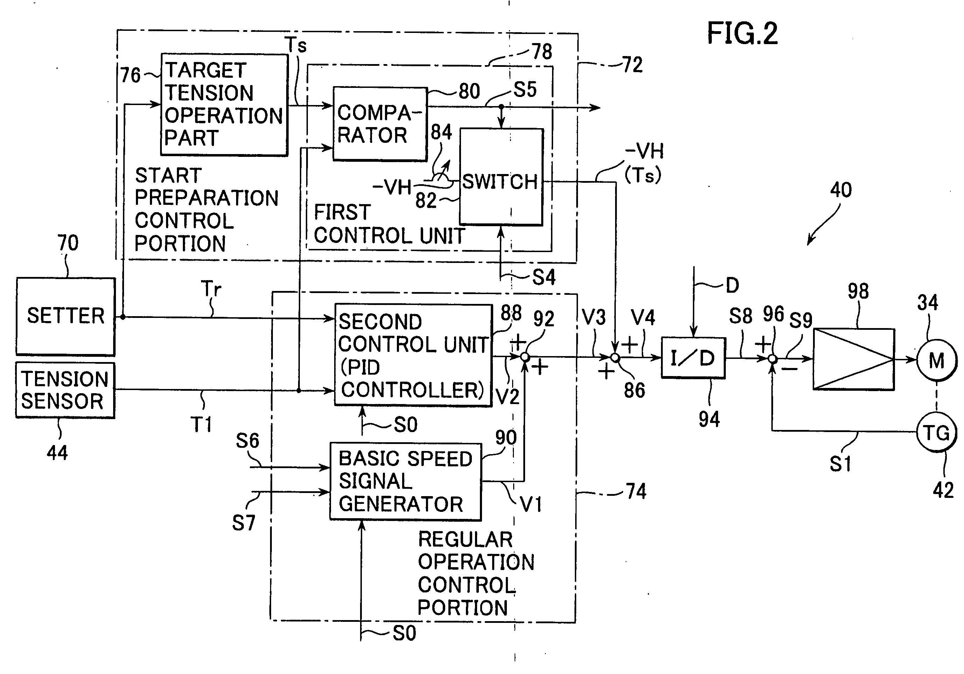

Referring to Fig. 2, the let-off control unit 40 constituting a part of the weft bar preventing apparatus includes: a setter 70 for setting a target tension Tr of the warp 12 at the time of regular operation; a start preparation control portion 72 which makes the loom 10 prepare to start by using the target tension Tr set in the setter 70; and a regular operation control portion 74 which makes the loom 10 perform a regular operation.

The target tension Tr at the time of regular operation to be set in the setter 70 differs depending on a weaving condition such as a kind of fabric or a situation of stoppage such as the number of times of stopping. Therefore, the target tension Tr at the time of regular operation is reset in accordance with an operable state of the loom 10.

The start preparation control portion 72 generates a target tension (as threshold value) Ts of the warp 12 at the start preparation time on the basis of the target tension Tr at the time of regular operation in a target tension operation part 76 acting as a tension processor and supplies the generated target tension Ts to a first control unit 78.

The target tension processor in the present invention is constituted mainly by the target tension operation part 76, and the drive circuit is constituted by the first control unit 78, an adding unit 86, a roll diameter corrector 94 and a driver 98, to be described later.

In the target tension operation part 76, information for determining the target tension Ts at the start preparation time by utilizing the target tension Tr at the regular operation time is previously set for each target tension Tr at the regular operation time. The target tension operation part 76 determines the target tension Ts on the basis of the target tension Tr and the set information.

Such information can include a function which defines the value of the target tension Tr (tension value) at the time of regular operation. In this case, the target tension operation part 76 carries out an operation as defined by the function using the target tension Tr at the time of regular operation to determine the target tension Ts at the start preparation time.

The above-mentioned information can include, in addition to the function, a correction factor for correcting the target tension Tr at the time of regular operation, and the function can includes a mathematical expression for multiplying the target tension Tr at the time of regular operation by the correction factor k. In this case, the target tension operation part 76 determines the target tension Ts at the start preparation time by multiplying the target tension by the correction factor k.

In place thereof, the foregoing information can include, in addition to the function, the correction value k, and the function can include a mathematical expression for adding the target tension value Tr at the time of regular operation and the correction value k. In this case, the target tension operation part 76 determines the target tension Ts at the start preparation time by adding the target tension value Tr during regular operation and the correction value k (correction amount).

In place of such a function as above, it is possible to make a data group including the target tension Ts at the start preparation time defined at each target tension Tr at the time of regular operation and selectively stored by using the target tension Tr at the time of regular operation. In this case, the target tension operation part 76 selects data corresponding to the target tension value Tr at the time of regular operation from the data group to determine the target tension Ts at the start preparation time.

**[Table 1]**

| Tr (kg • f) | Ts (kg • f) |
|---|---|
| 100-200 | 150 |
| 120-140 | 160 |
| 140·160 | 170 |
| • | • |
| • | • |
| • | • |
| • | • |
| • | • |
| • | • |

The function, correction factor, correction value and data group such as above may be set at each rotation angle (to put it more concretely warp shedding amount) of the main shaft 46 of the loom 10. In this case, the main shaft rotation angle signal S2 is inputted to the target tension operation part 76, and the target tension operation part 76 uses the set information, the target tension Tr at the time of regular operation, and the main shaft rotation angle signal S2 detected during stoppage of the loom to determine the target tension Ts corresponding to the target tension Tr and the rotation angle of the main shaft 46 when a start preparation signal S4 is inputted.

Such information as above used for determining the target tension Ts may be directly set in the target tension operation part 76, or may be received through a setter (not shown) connected to the main control unit of the loom 10. In such case, such information may be also set by using ten keys or set by using a storage medium.

In case the correction factor and correction value are used, they may be the same as the target tension at the time of regular operation depending on the loom 10, or in such a case, it is also possible to set as no correction (that is, to set the correction factor at 1 and the correction value at 0).

The first control unit 78 compares the target tension Ts outputted from the target tension operation part 76 and the warp tension T1 supplied from the warp tension sensor 44, and when both coincide, outputs a start preparation completion signal S5 from a comparator 80. The start preparation completion signal S5 is supplied to one of the input terminal switches 82 as well as to the main control unit not shown.

To another input terminal of the switch 82, the setter 84 is connected, and a speed command -VH set therein is inputted to that input terminal. The speed command -VH is used as a signal for driving the let-off motor 34 at the start preparation time, and has a great negative value so as to reverse the let-off motor 34 at the start preparation time.

The switch 82 outputs the speed command -VH set in the setter 84 to one of the input terminals of the adder 86 from the time when the start preparation signal S4 is inputted until the time when the start preparation completion signal S5 is inputted. However, when the warp tension T1 reached the target tension Ts, the start preparation completion signal S5 is generated from comparator 80, so that the switch 82 makes the speed command output 0, and as a result, the let-off motor 34 stops immediately. Therefore, the warp tension T1 is maintained at the target tension Ts generated by the start preparation motion at the target tension operation part 76.

While this embodiment copes with lowering of the warp tension caused by the warp extension during stoppage of the loom 10 to the target tension or lower, there is a case where the warp tension does not always lowers but is the same or over the target tension.

More concretely, the actual warp tension is sometimes raised, because the stoppage time of the loom 10 is short, the warp tension does not lower so much or the position of the cloth fell is moved forward, following the cloth fell position correcting motion by the take-up device side at the start preparation time. In such a case, a constitution such as follows can be considered.

The comparator 80, discriminating dimensional relation and coincidence of the actual warp tension to the target tension Ts at the start preparation time, makes a signal corresponding to the result of discrimination outputted to the switch 82. The switch 82, to which the setter to set a speed command VH of the positive value is connected, is enabled to output a selected speed command VH, according to the discrimination result by the comparator 80.

At the start preparation time, if the actual warp tension exceeds the target tension Ts at the start preparation time, the comparator 80 outputs a corresponding discrimination signal, and the switch 82 outputs the speed command VH of the positive value, thereby making the let-off motor 34 (in turn, the let-off beam) normally rotate and can drive the let-off motor 34 in the direction to approach the target tension Ts at the time of the start preparation.

As mentioned above, there are various inner constitution and function of a first control unit 78 considerable besides the above and not limited to the illustrated embodiment.

The regular operation control portion 74 at the time of regular operation has a basic speed signal generator 90 for generating a basic let-off speed V1 for letting off the warp 12, a second control unit 88 for generating a corrected let-off speed V2 to solve a deviation in tension of the warp 12, and an adding portion 92 for adding both speeds V1 and V2.

A weft density signal S6 representing the weft density of the cloth 24 and a loom rotation frequency signal S7 representing the rotation frequency of the main shaft 46 of the loom 10 are inputted to the basic speed generator 90, and the target tension Tr set in the setter 70 and the warp tension T1 from the warp tension sensor 44 are supplied to the second control unit 88. The operation signal S0 for commanding steady operation of the loom 10 is supplied from the main control unit to the basic speed generator 90 and the second control unit 88.

The basic speed signal generator 90 computes, while an ON operation signal S0 is being supplied, the let-off speed of the warp 12 so that the tension of the warp 12 may be a value corresponding to the kind of the cloth 24, on the basis of the loom rotation frequency signal S7 and the weft density signal S6, and outputs the computed speed to the input terminal of one of the adders 92 as the basic let-off speed V1.

The second control unit 88 computes a correction let-off speed V2 so that, based on the warp tension T1 supplied from the warp tension sensor 44 and the target tension Tr preset (i.e. previously set) in a setter 70, the warp tension applied to the warp 12 may become the target tension Tr at the time of regular operation, and outputs the computed correction let-off speed V2 to the other input terminal of an adder 92.

The adder 92 adds both input speeds V1 and V2 and outputs an addition signal V3 to the other input terminal of the adding portion 86. However, the regular operation control portion 74, particularly, the second control unit 88 and the basic speed signal generator 90 act only when the ON operation signal S0 is inputted, so that the addition signal V3 is not outputted from the adding portion 92 at the start preparation time.

Consequently, the adding portion 86, when the timing period of preparing to start, outputs the speed command -VH of the start preparation control portion 72 to a roll diameter corrector 94, while in regular operation, outputs the output signal V3 of the regular operation control portion 74 to the roll diameter corrector 94.

The roll diameter corrector 94, based on a roll diameter signal D from the roll diameter sensor 38 shown in Fig. 1, corrects the addition signal V4 from the adding portion 86 and outputs the corrected let-off speed signal S8 to one of the input terminals of the subtraction portion 96.

The subtracting portion 96 subtracts the rotation speed corresponding to the rotation speed signal S1 from the rotation speed corresponding to the let-off speed signal S8 of the roll diameter corrector 94 and outputs the result of calculation to a driver 98 as a let-off speed command S9. The driver 98 acts as an amplifying circuit for amplifying the let-off speed command S9 and for driving the let-off motor 34 by an output signal.

Concretely, the driver 98 is an amplification circuit for outputting the current to rotate the let-off motor 34 in response to the inputting let-off speed command S9. The driver 98 make to rotate the let-off motor 34 if the let-off speed command S9 from the subtracting portion 96 is positive, and make to rotate reverse the let-off motor 34 if it is negative. Thus, the tension of the warp 12 is maintained at a predetermined value (i.e. the target tension Ts).

Consequently, the let-off control unit 40 works as a feedback circuit for controlling the let-off motor 34 by using the rotation speed signal S1 and the let-off speed signal S8 so that the rotation speed of the warp beam 14 may become a speed corresponding to the let-off speed command S9.

As mentioned above, the let-off control unit 40, when the target tension Tr at the time of regular operation is set, automatically determines the target tension Ts at the start preparation time on the basis of the set target tension Tr. Consequently, in comparison to the conventional art, resetting of the target tension Ts at the start preparation time which has been made every time the target tension Tr at the time of regular operation is changed becomes unnecessary, thereby saving the work and surely preventing generation of weft bars due to failure in setting of the target tension Ts at the start preparation time.

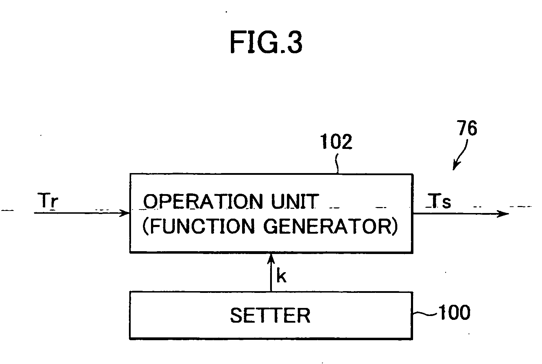

Referring to Fig. 3, the target tension operation part 76 is adapted to determine the target tension Ts at the start preparation time by multiplying the value of the target tension Tr (tension value) at the time of regular operation by the correction factor k, or by adding the correction value k to the target tension Tr. The target tension operation part 76 includes a operation unit 102 and a setter 100, and the factor k or the correction value k are set in the setter 100.

The operation unit 102 as a function generator determines the target tension Ts at the start preparation time, using a mathematical expression for multiplying the target tension Tr at the time of regular operation by the correction factor k or adding them, by multiplying the target tension Tr at the time of regular operation by the correction factor k or adding them. Such a mathematical expression is preliminarily set in the operation unit 102.

In case the operation unit 102 is a multiplier, the correction factor k is able to decide a positive value including 1 or other value and is set in the setter 100 prior to starting the loom by a worker according to a state of generation of weft bars. In this case, a mathematical expression used for determining the target tension Ts is Ts = k • Tr .

On the other hand, in case the operation unit 102 is an adder, the correction factor k (correction amount k) is able to decide a positive or a negative value including zero and is set in the setter 100 prior to starting the loom by a worker correspondence to a state of generation of weft bars. In this case, a mathematical expression used for determining the target tension Ts is Ts = Tr ± k.

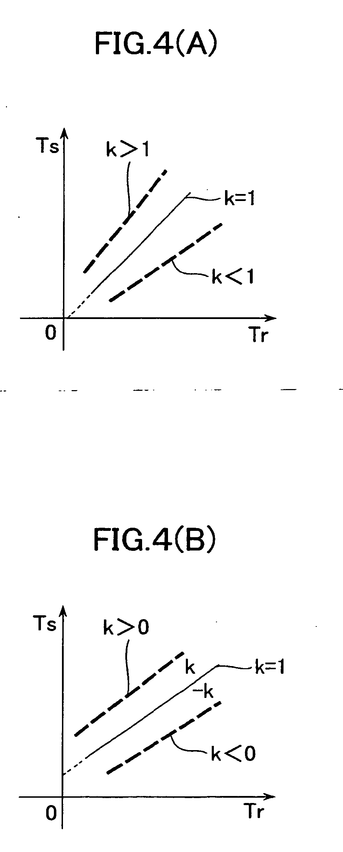

An example of setting the correction factor k is shown in Fig. 4 (A) and an example of setting the correction value k in Fig. 4 (B). In both cases, the axis of ordinate shows the target tension Ts at the start preparation time, and the abscissa shows the target tension Tr at the time of regular operation.

While in the foregoing embodiment, the target tension Ts at the start preparation time is determined by an operation using the mathematical expression, the determination of the target tension Ts at the start preparation time is not limited to such an example. For example, in place of the above-mentioned target tension operation part 76, it is possible to constitute such a target tension generating portion 110 (as such the target tension processor) as follows.

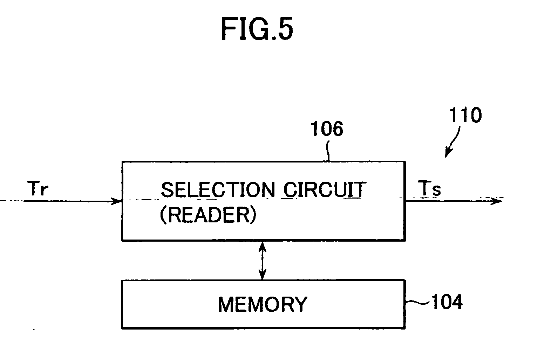

Referring to Fig. 5, the target tension generating portion 110 uses a data group including the target tension Ts at the start preparation time determined at each target tension Tr at the time of regular operation. The data group, as shown in Table 1, is stored in a memory 104 in a form of a table determined at each target tension Tr at the time of regular operation so as to be selected, using the target tension Tr at the time of regular operation.

A selection circuit 106 as a reader, by using the target tension Tr at the time of regular operation to select the target tension Ts corresponding to the target tension Tr, thereby determining the target tension Ts at the start preparation time.

It is desirable that the main shaft rotation angle for starting operation of the loom 10 be constant. However, in case of the loom 10 which is not constituted like that (that is, which causes irregularity in the main shaft rotation angle for starting operation), it is desirable further to determine the target tension at the start preparation time in accordance with the main shaft rotation angle signal S2 detected during the stoppage.

In such a case as above, at least one of the mathematical expression, correction factor, correction value and data group corresponding to the main shaft rotation angle is set as the information in the target tension operation part 76 or the target tension generating portion 110. By this, the target tension operation part 76 or the target tension generating portion 110 can determine the target tension at the start preparation time on the basis of the target tension Tr at the time of regular operation and the main shaft angle signal S2 during the stoppage of the loom 10.

The timing for detecting the main shaft rotation angle for determination of the target tension Ts at the start preparation time may be any one of immediately after stopping, waiting time for arrival of weaving workers, and just before start preparation. When setting the detection timing at the waiting time for arrival of workers, a displacement of the position of the cloth fell 22 due to extension of the warp 12 becomes correctable. When setting the detection timing at the start preparation time, influence of fluctuation tension accompanying a dispersion in the angle of the main shaft 46 at the start preparation time, i.e., a dispersion in the amount of warp sheds can be dissolved.

The target tension Ts at the start preparation time may be determined every time the target tension Tr at the time of regular operation is changed, or may be constantly outputted by monitoring the set value at the time of regular operation. Also, the timing for determining the target tension Ts at the start preparation time is not limited to the time for changing the target tension Tr at the time of regular operation but may be determined at least by immediately before starting tension setting motion at the start preparation time.

It is possible to set, as the target tension Ts at the start preparation time, not only the final one but also one or more target tensions as its previous stage, to set, after generation of the start preparation signal S4, the warp tension at the target tension in series gradually, and finally at the final target tension Ts.

While the tension of the entire warp is detected in the foregoing embodiment, it is possible to detect, in place thereof, the tension of a part of the warp 12. It is also possible to detect a displacement of the back roller 16, as the warp tension, instead of detecting a distortion of the back roller 16, or to detect a distortion or displacement of members in contact, for example, with the warp 12 or the cloth 24.

While, in the foregoing embodiment, the let-off motor 34 and the take-up motor 54 are controlled by separate control units, it is possible that both of them are controlled by a single control unit, or the controlling function of both are controlled by the main control unit.

As a controller for performing the tension setting motion, it is possible to use a PID controller, or another known controller, or further, a more simplified controller. When using as a controller a comparator for comparing the warp tensions, and a speed command output circuit for switching the output states of the speed command depending on the result of comparison, it is possible, in order to reduce a gap in tension due to inertial rotation after reaching the target tension, to output a high-speed speed command value in the direction for dissolving, for example, deviation in tension, to output when approaching the target tension by switching to a slow-speed speed command value in the direction to dissolve, for example, deviation in tension, and to stop the output by reaching the set tension.

The present invention can be applied to a control of derivative weaving. For instance, in a weaving machine which switches plural kinds of wefts according to a weft inserting pick, it is possible to switch the target tension during start preparation every time the target tension is changed in case the target tension is switched during regular operation for each weft density.

Also, in the foregoing embodiment, the start preparation control portion 72, regular operation control portion 74, adding portion 86 and roll diameter corrector 94 have circuits of separate constitutions, but it is possible to make them a single circuit constitution. Also, their functions may be performed by a hardware circuit, but they may be performed by a microcomputer and software processing.

The present invention is not limited to the above-mentioned embodiments but can be variously modified without departing from the following claims.

## Claims

1. A weft bar preventing apparatus for a loom (10) **characterized in that** it comprises: a target tension processor (76, 110) capable of determining a target tension (Ts) of the warp (12) at the start preparation time to be a value different from a target tension (Tr) of the warp (12) at the regular operation time; and a drive circuit (78, 86, 94, 98) for driving a warp beam (14) so as to make a warp tension a target tension corresponding to the start preparation time outputted from said target tension processor (76, 110) by a start preparation signal (S4) inputted prior to starting operation of a loom (10);
wherein information for determining the target tension at the start preparation time by the target tension at the regular operation time is preset in said target tension processor; and
wherein said target tension processor (76, 110) determines the target tension (Ts) at the start preparation time on the basis of the target tension at said regular operation time and said information.

2. A weft bar preventing apparatus according to claim 1, wherein said information includes a function with a target tension of the warp as a parameter, and wherein said target tension processor (76) performs operation by using said function to determine the target tension (Ts) at said start preparation time.

3. A weft bar preventing apparatus according to claim 2,
wherein said information further includes a correction factor (k);
wherein said function includes a mathematical expression to multiply the target tension (Tr) of the warp at said regular operation time by said correction factor; and
wherein said target tension processor (76) performs multiplication of said target tension (Tr) at said regular operation time by said correction factor to determine the target tension (Ts) at said start preparation time.

4. A weft bar preventing apparatus according to claim 2,
wherein said information further includes a correction value (k);
wherein said function includes a mathematical expression to add the target tension (Tr) at said regular operation time and said correction value (k); and
wherein said target tension processor (76) performs addition of the target tension (Tr) at said regular operation time and said correction value (k) to determine the target tension (Ts) at said start preparation time.

5. A weft bar preventing apparatus according to claim 1,
wherein said information includes a data group including the target tension (Tr) at said start preparation time determined for each target tension (Ts) at said regular operation time and stored so as to be selected by using the target tension (Tr) at said regular operation time; and
wherein said target tension processor (110) selects data corresponding to the target tension value (Tr) at said regular operation time from said data group to determine the warp target tension (Ts) at the start preparation time.

6. A weft bar preventing apparatus according to any one of claims 1 through 5,
wherein at least a part of said information is set for each rotation angle of the main shaft (46) of the loom (10);
wherein a main shaft rotation angle signal (S2) representing the rotation angle of the main shaft (46) is inputted in said target tension processor (76, 110); and
wherein said target tension processor (76, 110), when the start preparation signal (S4) is inputted, uses said information, the target tension (Tr) at said regular operation time and the main shaft rotation angle signal (S2) detected during stoppage of the loom (10) to determine a target tension (Ts) at the corresponding start preparation time.

7. A loom comprising a weft for preventing apparatus (76, 110) according to any one of claims 1 through 6.

## Patentansprüche

1. Vorrichtung zum Vermeiden von Schussbanden für eine Webmaschine (10), **dadurch gekennzeichnet, dass** die Vorrichtung aufweist:
einen Zielspannungsprozessor (76, 110), welcher dazu geeignet ist, die Zielspannung (Ts) der Webkette (12) zum Startvorbereitungszeitpunkt auf einen Wert einzustellen, der sich von einer Zielspannung (Tr) der Webkette (12) zu einem Regulärbetriebs-Zeitpunkt unterscheidet, und einer Antriebsschaltung (78, 86, 94, 98) zum Antreiben eines Kettbaums (14), so dass die Kettspannung einer Zielspannung entspricht, welche dem Startvorbereitungszeitpunkt zugeordnet ist, der vom Zielspannungsprozessor (76, 110) über ein Startvorbereitungssignal (S4) ausgegeben wurde, welches vor dem Start des Betriebes der Webmaschine (10) eingegeben wurde,
wobei Information zum Bestimmen der Zielspannung am Startvorbereitungszeitpunkt durch die Zielspannung zum Regulärbetriebs-Zeitpunkt im Zielspannungsprozessor voreingestellt ist, und
wobei der Zielspannungsprozessor (76, 110) die Zielspannung (Ts) zum Startvorbereitungszeitpunkt auf der Grundlage der Zielspannung zum Regulärbetriebs-Zeitpunkt und der Information bestimmt.

2. Vorrichtung zum Vermeiden von Schussbanden nach Anspruch 1, bei welcher die Information eine Funktion umfasst, welche eine Zielspannung der Webkette als Parameter hat, und wobei der Zielspannungsprozessor (76) arbeitet, indem er die Funktion verwendet, um die Zielspannung (Ts) zum Startvorbereitungszeitpunkt zu bestimmen.

3. Vorrichtung zum Vermeiden von Schussbanden nach Anspruch 2,
wobei die Information ferner einen Korrekturfaktor (k) umfasst,
wobei die Funktion einen mathematischen Ausdruck enthält, um die Zielspannung (Tr) der Webkette zum Regulärbetriebs-Zeitpunkt mit dem Korrekturfaktor zu multiplizieren, und
wobei der Zielspannungsprozessor (76) eine Multiplikation der Zielspannung (Tr) zum Regulärbetriebs-Zeitpunkt mit dem Korrekturfaktor durchführt, um die Zielspannung (Ts) zum Startvorbereitungszeitpunkt zu bestimmen.

4. Vorrichtung zum Vermeiden von Schussbanden nach Anspruch 1, wobei die Information ferner einen Korrekturwert (k) aufweist, wobei die Funktion einen mathematischen Ausdruck enthält, um die Zielspannung (Tr) zum Regulärbetriebs-Zeitpunkt und den Korrekturwert (k) zu addieren, und
wobei der Zielspannungsprozessor (76) die Addition der Zielspannung (Tr) zum Regulärbetriebs-Zeitpunkt und des Korrekturwerts (k) durchführt, um die Zielspannung (Ts) zum Startvorbereitungszeitpunkt zu bestimmen.

5. Vorrichtung zum Vermeiden von Schussbanden nach Anspruch 1, wobei die Information eine Datengruppe enthält, einschließlich der Zielspannung (Tr) zum Startvorbereitungszeitpunkt, die für jede Zielspannung (Ts) zum Regulärbetriebs-Zeitpunkt bestimmt wurde und die so gespeichert wurde, dass sie unter Verwendung der Zielspannung (Tr) zum Regulärbetriebs-Zeitpunkt ausgewählt ist, und
wobei der Zielspannungsprozessor (110) Daten aus der Datengruppe auswählt, die dem Zielspannungswert (Tr) zum Regulärbetriebs-Zeitpunkt entsprechen, um die Ziel spannung (Ts) der Kette zum Startvorbereitungszeitpunkt zu bestimmen.

6. Vorrichtung für das Vermeiden von Schussbanden nach einem der Ansprüche 1 bis 5,
bei welcher zumindest ein Teil der Information für jeden Drehwinkel der Hauptwelle (46) der Webmaschine (10) festgelegt ist, wobei das Hauptwellen-Drehwinkelsignal (S2), welches den Drehwinkel der Hauptwelle (46) repräsentiert, in den Zielspannungsprozessor (76, 110) eingegeben ist, und
wobei der Zielspannungsprozessor (76, 110), wenn das Startvorbereitungssignal (S4) eingegeben ist, die Information, die Zielspannung (Tr) zum Regulärbetriebs-Zeitpunkt und das Hauptwellenrotationswinkelsignal (S2) verwendet, welches während des Anhaltens der Webmaschine (10) erfasst wurde, um die Zielspannung-(Ts) zum entsprechenden Startvorbereitungszeitpunkt zu bestimmen.

7. Webmaschine, aufweisend eine Vorrichtung zum Vermeiden von Schussbanden (76, 110) nach einem der Ansprüche 1 bis 6.

## Revendications

1. Appareil pour empêcher la formation de bande en trame pour un métier à tisser (10), **caractérisé en ce qu'**il comprend : un processeur de tension cible (76, 110) capable de déterminer une tension cible (Ts) du fil de chaîne (12) au moment de la préparation du départ pour obtenir une valeur différente d'une tension cible (Tr) du fil de chaîne (12) au moment correspondant à la vitesse de régime ; et un circuit d'entraînement (78, 86, 94, 98) pour entraîner une ensouple de chaîne (14) de façon à obtenir, pour la tension du fil de chaîne, une tension cible correspondant au moment de la préparation de départ, fournie par ledit processeur de tension cible (76, 110) via un signal de préparation de départ (S4) entré avant le démarrage de métier à tisser (10) ;
dans lequel les informations pour déterminer la tension cible au moment de la préparation du départ via la tension cible au moment correspondant à la vitesse de régime sont préétablies dans ledit processeur de tension cible ; et
dans lequel ledit processeur de tension cible (76, 110) détermine la tension cible (Ts) au moment de la préparation du départ sur base de la tension cible au moment correspondant à la vitesse de régime et sur bases desdites informations.

2. Appareil pour empêcher la formation de bande en trame selon la revendication 1, dans lequel lesdites informations englobent une fonction liée à la tension cible du fil de chaîne, en tant que paramètre, et dans lequel ledit processeur de tension cible (76) met en oeuvre le fonctionnement en utilisant ladite fonction pour déterminer la tension cible (Ts) audit moment de la préparation du départ.

3. Appareil pour empêcher la formation de bande en trame selon la revendication 2,
dans lequel lesdites informations englobent en outre un facteur de correction (k) ;
dans lequel ladite fonction englobe une expression mathématique pour multiplier la tension cible (Tr) du fil de chaîne au moment correspondant à la vitesse de régime par ledit facteur de correction ; et
dans lequel ledit processeur de tension cible (76) procède à la multiplication de ladite tension cible (Tr) du fil de chaîne au moment correspondant à la vitesse de régime par ledit facteur de correction dans le but de déterminer la tension cible (Ts) audit moment de la préparation du départ.

4. Appareil pour empêcher la formation de bande en trame selon la revendication 2,
dans lequel lesdites informations englobent en outre une valeur de correction (k) ;
dans lequel ladite fonction englobe une expression mathématique pour ajouter la tension cible (Tr) du fil de chaîne au moment correspondant à la vitesse de régime et ladite valeur de correction (k) ; et
dans lequel ledit processeur de tension cible (76) procède à l'addition de ladite tension cible (Tr) du fil de chaîne au moment correspondant à la vitesse de régime et de ladite valeur de correction (k) dans le but de déterminer la tension cible (Ts) audit moment de la préparation du départ.

5. Appareil pour empêcher la formation de bande en trame selon la revendication 1,
dans lequel lesdites informations englobent un groupe de données englobant la tension cible (Tr) audit moment de la préparation du départ, déterminées pour chaque tension cible (Ts) audit moment correspondant à la vitesse de régime et mémorisées pour pouvoir être sélectionnées en utilisant la tension cible (Tr) audit moment correspondant à la vitesse de régime ; et
dans lequel ledit processeur de tension cible (110) sélectionne des données correspondant à la valeur de tension cible (Tr) audit moment correspondant à la vitesse de régime à partir dudit groupe de données afin de déterminer la tension cible du fil de chaîne (Ts) au moment de la préparation du départ.

6. Appareil pour empêcher la formation de bande en trame selon l'une quelconque des revendications 1 à 5,
dans lequel au moins une partie desdites informations est déterminée pour chaque angle de rotation de l'arbre principal (46) du métier à tisser (10) ;
dans lequel un signal de l'angle de rotation (S2) de l'arbre principal représentant l'angle de rotation de l'arbre principal (46) est entré dans ledit processeur de tension cible (76, 110) ; et
dans lequel ledit processeur de tension cible (76, 110), lorsque le signal de préparation du départ (S4), a été entré, utilise lesdites informations, à savoir la tension cible (Tr) audit moment correspondant à la vitesse de régime et le signal (S2) de l'angle de rotation de l'arbre principal détecté lors de la mise à l'arrêt du métier à tisser (10) afin de déterminer une tension cible (Ts) au moment correspondant à la préparation du départ.

7. Métier à tisser comprenant un appareil pour empêcher la formation de bande en trame (76, 110) selon l'une quelconque des revendications 1 à 6.
